# EUROPÄISCHE PATENTSCHRIFT

(11) **EP 3 306 786 B1**
(45) Veröffentlichungstag und Bekanntmachung des Hinweises auf die Patenterteilung: **30.01.2019**
(21) Anmeldenummer: 17001613.3
(22) Anmeldetag: 15.02.2016
(51) Int. Cl.: H02K 1/30, H02K 15/16, H02K 7/102

(54) **ELEKTROMOTOR**
ELECTRIC MOTOR
MOTEUR ÉLECTRIQUE

(30) Priorität: 19.03.2015 DE 102015003468
(43) Veröffentlichungstag der Anmeldung: 11.04.2018
(62) Teilanmeldung aus: 16704545.9
(73) Patentinhaber: Sew-Eurodrive GmbH & Co. KG, 76646 Bruchsal (DE)
(72) Erfinder: Partheymüller, Alexander, D-76139 Karlsruhe (DE)

(56) Entgegenhaltungen:
- EP-A1- 1 892 817
- EP-A2- 1 895 641
- WO-A1-2014/185229

## Beschreibung

Die Erfindung betrifft einen Elektromotor.

Es ist allgemein bekannt, dass ein Elektromotor eine relativ zum Stator drehbar gelagerte Rotorwelle aufweist.

Aus der EP 1 895 641 A2 ist als nächstliegender Stand der Technik ein Direktantrieb bekannt.

Aus der WO 2007/111425 A1 ist eine Windturbine bekannt.

Aus der US 2013/0307364 A1 ist eine Wellenbefestigung für einen hocheffizienten Permanentmotor bekannt.

Aus der WO 2014/185229 A1 ist ein elektrischer Linearaktuator bekannt.

Aus der EP 1 892 817 A1 ist ein rahmenloser Motor bekannt.

Der Erfindung liegt daher die Aufgabe zugrunde, einen lagerlosen Antrieb für eine anzutreibende Vorrichtung weiterzubilden.

Erfindungsgemäß wird die Aufgabe bei dem Elektromotor nach den in Anspruch 1 angegebenen Merkmalen gelöst.

Von Vorteil ist dabei, dass der Rotor vorkomplettiert ist zusammen mit dem Pressverbindungsmittel und somit am Stator festlegbar ist, insbesondere über die Zentrierscheibe, welche die Zentrierung am Stator hierbei ausführt und auch zur Befestigung mit dem Stator, insbesondere einem Flanschteil des Stators verbunden ist. Erst beim Verbinden des Rotors mit der anzutreibenden Welle, wozu das Pressverbindungsmittel betätigt wird, wird die Verbindung der Zentrierscheibe mit dem Stator, insbesondere mit dem Flanschteil des Stators, wieder gelöst und somit der Rotor zum Stator relativ drehbar ausgeführt.

Bei einer vorteilhaften Ausgestaltung ist das Pressverbindungsmittel von den Spannschrauben haltbar, insbesondere bei Transport des Elektromotors, insbesondere vor dem Anmontieren an eine anzutreibende Vorrichtung. Von Vorteil ist dabei, dass das Pressverbindungsmittel am Rotor gehalten ist.

Bei einer vorteilhaften Ausgestaltung ist das Pressverbindungsmittel mittels einer oder der Spannschrauben betätigbar zum Herstellen einer Pressverbindung der Rotorwelle mit einer anzutreibenden Welle, insbesondere Hohlwelle,

insbesondere wobei beim Betätigen, also Einschrauben der Spannschrauben in ein Teil des Pressverbindungsmittels, eine Pressverbindung der Rotorwelle mit einer anzutreibenden Welle herstellbar ist. Von Vorteil ist dabei, dass mittels der Spannschrauben nicht nur das Paket aus Rotorsegmenten zusammengehalten wird sondern auch das Pressverbindungsmittel betätigt wird.

Erfindungsgemäß weist der Elektromotor ein mit dem Stator, insbesondere Statorgehäuse, verbundenes Flanschteil auf. Von Vorteil ist dabei, dass am Flanschteil die Zentrierscheibe ausrichtbar und festlegbar ist. Hierzu weist das Flanschteil einen konischen Oberflächenabschnitt auf, der einem konischen Oberflächenabschnitt der Zentrierscheibe entsprechend ausgebildet ist.

Bei einer vorteilhaften Ausgestaltung sind Spannschrauben durch Ausnehmungen der Rotorsegmente und/oder Zentrierscheibe hindurchgeführt,
wobei mittels der Spannschrauben der Stapel zwischen der Zentrierscheibe und dem Pressverbindungsmittel einspannbar ist,
insbesondere wobei die Spannschrauben axial gerichtet angeordnet sind, insbesondere also in Rotorachsrichtung. Von Vorteil ist dabei, dass das einspannen in einfacher Weise ausführbar ist.

Bei einer vorteilhaften Ausgestaltung sind die Spannschrauben jeweils in eine Gewindebohrung eines Teils des Pressverbindungsmittels eingeschraubt, insbesondere zumindest teilweise eingeschraubt sind,
insbesondere wobei der Kopf einer jeweiligen Spannschraube an der Zentrierscheibe anliegt, insbesondere die Zentrierscheibe auf den Stapel hin drückt. Von Vorteil ist dabei, dass die Spannschrauben in ein Ringteil einschraubbar sind und somit das Ringteil axial verschieben können, wodurch das Pressverbindungsmittel betätigbar ist.

Bei einer vorteilhaften Ausgestaltung sind am radial äußeren Umfang des jeweiligen Rotorsegments Dauermagnete angeordnet, insbesondere wobei das Rotorsegment ein Blechpaket aufweist, auf dessen radial äußerem Umfang des jeweiligen Rotorsegments Dauermagnete angeordnet sind. Von Vorteil ist dabei, dass der Motor als Synchronmotor ausführbar ist und/oder mittels der Spannschrauben abstoßende Magnetkräfte zwischen den Rotorsegmenten überwindbar sind.

Bei einer vorteilhaften Ausgestaltung weist das Pressverbindungsmittel eine Schrumpfscheibe und Pressringe auf, wobei die Schrumpfscheibe an ihrer äußeren Oberfläche zwei Konusabschnitte aufweist, worauf die Pressringe verschiebbar angeordnet sind, wobei Spannschrauben mit zumindest einem der Pressringe schraubverbindbar sind. Von Vorteil ist dabei, dass als Pressverbindungsmittel eine einfach aufgebaute Schrumpfscheibenverbindung verwendbar ist.

Bei einer vorteilhaften Ausgestaltung weist die Zentrierscheibe an ihrer Oberfläche einen Konusabschnitt auf und das Flanschteil einen entsprechenden Konusabschnitt an seiner Oberfläche auf, so dass die beiden Konusabschnitte zumindest in einem Abschnitt oder abschnittsweise aneinander anliegen,
wobei die Zentrierscheibe mit dem Flanschteil lösbar verbunden ist, insbesondere schraubverbunden ist,
insbesondere bei Transport des Motors, insbesondere also vor dem Anmontieren an eine anzutreibende Vorrichtung. Von Vorteil ist dabei, dass eine Zentrierung des Rotors zum Stator über die konischen Oberflächenabschnitte der Zentrierscheibe und des Flanschteils ausführbar ist. Somit ist schon bei Transport des lagerlosen Motors vor dem Verbinden mit der anzutreibenden Vorrichtung der Rotor zum Stator ausgerichtet.

Erfindungsgemäß weist die Zentrierscheibe Ausnehmungen auf, welche in Umfangsrichtung voneinander regelmäßig beabstandet sind. Von Vorteil ist dabei, dass ein formschlüssiges Einrasten eines Arretierelements; insbesondere Stößels, in einfacher Weise ausführbar ist und die Arretierung in geringen Winkelabständen ausführbar ist.

Bei einer vorteilhaften Ausgestaltung sind weitere erste Ausnehmungen auf einem ersten Radialabstand und weitere zweite Ausnehmungen auf einem zweiten Radialabstand angeordnet, wobei der erste Radialabstand größer ist als der zweite Radialabstand,
insbesondere wobei die weiteren ersten Ausnehmungen in Umfangsrichtung voneinander regelmäßig beabstandet sind,
insbesondere wobei die weiteren ersten Ausnehmungen in Umfangsrichtung voneinander regelmäßig beabstandet sind. Von Vorteil ist dabei, dass eine weiter feinere Winkelbeabstandung für die Arretierungspositionen erreichbar ist.

Bei einer vorteilhaften Ausgestaltung ist am Flanschteil zumindest ein insbesondere als Hubmagnet ausgeführter Elektromagnet angeordnet, von welchem jeweils ein Stößel entgegen der von einem Federelement erzeugten Federkraft bewegbar ist,
insbesondere so dass der jeweilige Stößel einrastbar ist in eine jeweilige der weiteren Ausnehmungen. Von Vorteil ist dabei, dass die Arretierung elektromagnetisch betätigbar ist.

Bei einer vorteilhaften Ausgestaltung ist bei Bestromung des Elektromagneten der Stößel von der Zentrierscheibe weggezogen und bei Nichtbestromung des Elektromagneten wird der Stößel von dem Federelement in eine der weiteren Ausnehmungen gedrückt. Von Vorteil ist dabei, dass bei Stromausfall eine Haltefunktion realisierbar ist.

Erfindungsgemäß beträgt der Winkelabstand einer jeweiligen weiteren Ausnehmung zur in Umfangsrichtung jeweils nächstbenachbarten weiteren Ausnehmung zwischen 1° und 5°,
wobei ein jeweiliger Stößel auf demselben Radialabstand angeordnet ist wie eine weitere Ausnehmung. Von Vorteil ist dabei, dass ein sehr feiner Winkelabstand bei der Haltefunktion realisierbar ist.

Bei einer vorteilhaften Ausgestaltung sind zumindest zwei als Hubmagnet ausgeführte Elektromagnete auf verschiedenem Radialabstand angeordnet, wobei die jeweiligen, vom jeweiligen Elektromagnet entgegen der von einem jeweiligen Federelement erzeugten Federkraft bewegbaren Stößel ebenfalls auf verschiedenen Radialabständen angeordnet sind. Von Vorteil ist dabei, dass eine noch weiter verfeinerte Winkelbeabstandung für die Haltefunktion erreichbar ist.

Bei einer vorteilhaften Ausgestaltung ist das Flanschteil mit einem Deckelteil derart verbunden, dass die Elektromagnete und ein Winkelsensor vom Flanschteil zusammen mit dem Deckeilteil gehäusebildend umgeben sind. Von Vorteil ist dabei, dass die Elektromagnete geschützt angeordnet sind.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine Schrägansicht auf den angeschnittenen Rotor eines erfindungsgemäßen Elektromotors gezeigt, wobei die Rotorwelle 23 weggelassen ist.
In der Figur 2 ist eine Schrägansicht auf den angeschnittenen Rotor eines anderen erfindungsgemäßen Elektromotors gezeigt, wobei die Rotorwelle 23 vorhanden ist.
In der Figur 3 ist die Zentrierscheibe 4 des in Figur 2 gezeigten Motors in Schrägansicht dargestellt.
In der Figur 4 ist ein Querschnitt durch einen Teilbereich des Elektromotors gezeigt, wobei der Stößel 40 nicht in die Aussparung 45 hineinragt.

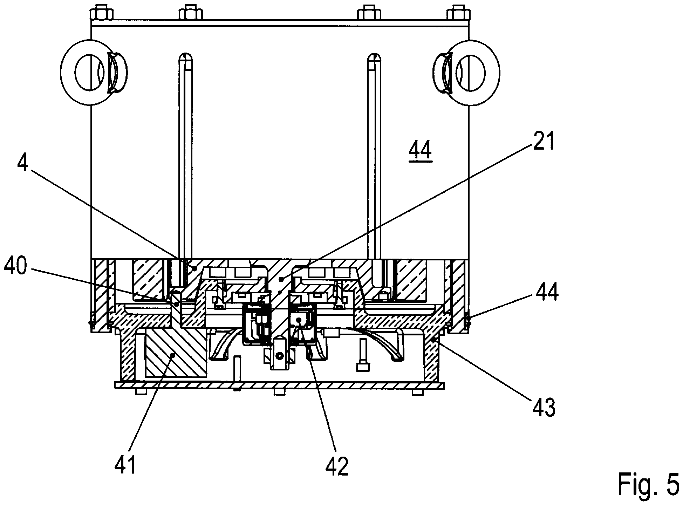

In der Figur 5 ist ein Querschnitt durch den Teilbereich des Elektromotors gezeigt, wobei der Stößel 40 in die Aussparung 45 hineinragt.

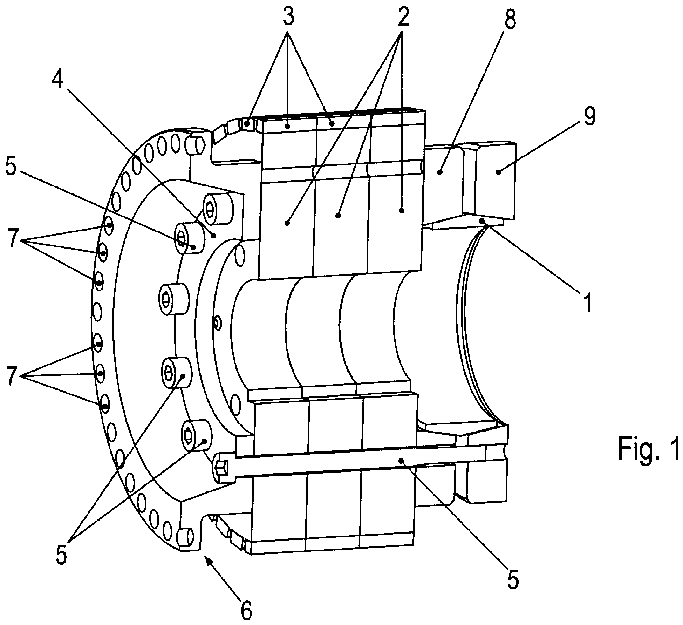

Wie in Figur 1 gezeigt, ist das zum Verbinden mit der Rotorwelle 23 vorgesehene Rotorpaket aus in axialer Richtung gestapelt angeordneten Rotorsegmenten 2 zusammengesetzt, wobei am ersten axialen Endbereich eine Schrumpfscheibe 1 und am anderen axialen Endbereich eine Zentrierscheibe 2 angeordnet ist.

Auf der radial äußeren Oberfläche der Rotorsegmente 2 sind Dauermagnete 3 angeordnet, insbesondere klebeverbunden. Die Ausdehnung des jeweiligen Dauermagneten 3 in axialer Richtung überschreitet nicht die axiale Ausdehnung eines jeweiligen Rotorsegments 2.

Mittels axial ausgerichteten Spannschrauben 5 werden die Rotorsegmente 2, die Schrumpfscheibe 1 und die Zentrierschreibe 4 zusammengehalten. Dabei sind in den Rotorsegmenten 2 und in der Zentrierschreibe 4 axial durchgehende Ausnehmungen angeordnet und darin Spannschrauben 5 durchgeführt, welche in Gewindebohrungen eines Pressrings 9 eingeschraubt sind, der ein Aufschrumpfen der Schrumpfscheibe 1 auf die Hohlwelle 24 bewirkt. Dabei drücken die Schraubenköpfe der Spannschrauben 5 auf die Zentrierscheibe 4, die somit auf die Rotorsegmente 2 gedrückt wird und diese dadurch in axialer Richtung zusammengepresst werden und gegen die Schrumpfscheibe 1 gedrückt werden.

Die Spannschrauben 5 sind in Umfangsrichtung voneinander regelmäßig beabstandet.

Vorzugsweise sind die Rotorsegmente 2 mit gleicher axialer Breite ausgeführt.

Die Zentrierscheibe 4 ist an ihrem von den Rotorsegmenten 2 abgewandten Endbereich mit einem radial aufgeweiteten Kragenabschnitt 6 ausgeführt. Dieser Kragenabschnitt 6 weist Ausnehmungen 7 auf, die als Sacklochbohrungen ausgeführt sind und alle denselben Radialabstand aufweisen sowie in Umfangsrichtung voneinander regelmäßig beabstandet sind.

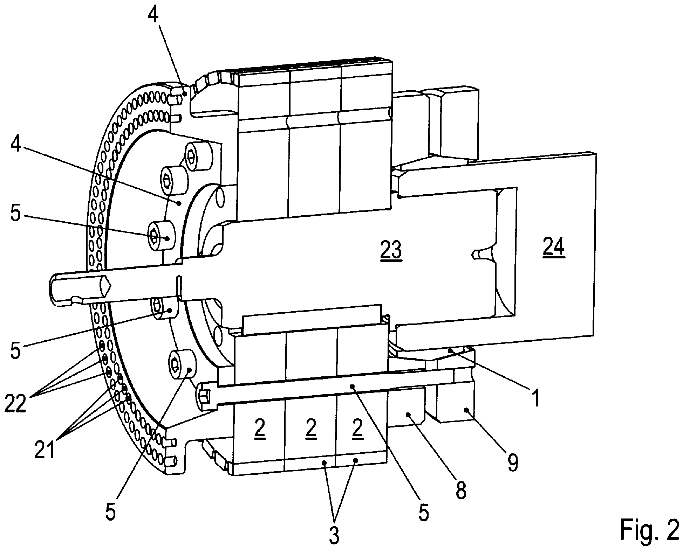

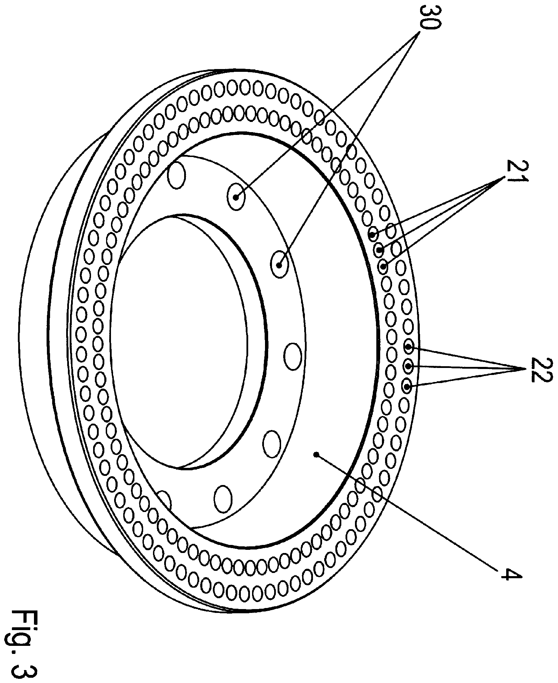

Wie in Figur 2 und Figur 3 gezeigt sind aber auch statt der auf einem Radialabstand angeordneten Ausnehmungen 7 Ausnehmungen 21 auf einem ersten Radialabstand und Ausnehmungen 22 auf einem zweiten Radialabstand angeordnet, wobei der zweite Radialabstand größer ist als der erste Radialabstand.

Der Kragenabschnitt 6 überdeckt somit einen Radialabstandsbereich, welcher größer ist als der von den Spannschrauben 5 überdeckte Radialabstandsberiech und als der von den die Spannschrauben 5 aufnehmenden Ausnehmungen 30 überdeckte Radialabstandsbereich.

Außerdem sind die Ausnehmungen 30 der Zentrierscheibe 4, durch welche die spannschrauben 5 geführt sind, axial näher an den Rotorsegmenten 2 angeordnet als der Kragenabschnitt 6 der Zentrierscheibe.

Der Radialabstand der Ausnehmungen 7, 21 und 22 ist also Größer als der Radialabstand der Ausnehmungen 30.

Wie in Figur 2 gezeigt, ist das Rotorpaket auf die Rotorwelle 23 aufgepresst und somit mit dieser Rotorwelle 23 drehfest verbunden.

Die Rotorwelle 23 ist in die Hohlwelle 24 eingeführt, wobei die Hohlwelle 24 von einer sie in Umfangsrichtung umgebenden Schrumpfscheibe 1 auf die Rotorwelle 23 aufgeschrumpft gehalten ist und somit drehfest mit der Rotorwelle 23 verbunden ist. Die Hohlwelle 24 ist entsprechend dünnwandig ausgeführt und der von der Schrumpfscheibe 1 überdeckte axiale Bereich überlappt mit dem vom Berührbereich zwischen Rotorwelle 23 und Hohlwelle 24 überdeckten axialen Bereich.

Die Schrumpfscheibe 1 ermöglicht somit die kraftschlüssige Verbindung zwischen Rotorwelle 23 und Hohlwelle 24. Somit ist vom Elektromotor, insbesondere von der Rotorwelle 23, die Hohlwelle 24 antreibbar, die einer vom Elektromotor anzutreibenden Vorrichtung zugehört.

Der Elektromotor selbst ist lagerlos herstellbar. Erst bei Anmontieren an die Vorrichtung wird die Rotorwelle 23 mittels der Schrumpfscheibe 1 mit der Hohlwelle 24 verbunden. Somit ist die Schrumpfscheibe 1 bei Auslieferung der Rotors verliersicher verbunden mit dem Rotor, nämlich mittels der Spannschrauben 5 zusammen mit den Pressringen 8 und 9 sowie mit den Rotorsegmenten 2 und der Zentrierscheibe 4 verbunden. Für diese Zeit der Auslieferung, also des Transportes des Rotors ohne Verbindung zur anzutreibenden Vorrichtung, wird der Rotor festgelegt am Stator des Elektromotors, also nicht drehbar verbunden.

Beim Anmontieren an die anzutreibende Vorrichtung wird diese Festlegung gelöst und die Hohlwelle 24 der anzutreibenden Vorrichtung mittels der Schrumpfscheibe 1 kraftschlüssig an die Rotorwelle 23 verbunden.

Die Schrumpfscheibe 1 weist zwei gegenläufige Konusabschnitte an ihrer radial äußeren Oberfläche auf, so dass die zwei darauf aufgesetzten Pressringe 8 und 9 durch axiales Annähern die Schrumpfscheibe 1 betätigen, also auf die Hohlwelle 24 drücken, so dass diese auf die Rotorwelle 23 aufgeschrumpft wird.

Das axiale Annähern der beiden Pressringe wird durch die Spannschrauben 5 bewirkt, welche in die Gewindebohrung des Pressrings 9, also des axial von den Rotorsegmenten 2 weiter entfernt angeordneten Pressrings, eingeschraubt sind und somit beim weiteren Einschrauben der Spannschrauben 5 axial zu den Rotorsegmenten 2 hin gezogen werden.

Mittels der Spannschrauben 5 wird also die Schrumpfverbindung betätigt. Dabei ist besonders vorteilhaft, dass die Betätigung also von der Zentrierscheibenseite her, also von der von der Schrumpfscheibe 1 abgewandten axialen Seite der Rotorsegmente 2 und/oder der Zentrierscheibe 4 ausführbar ist.

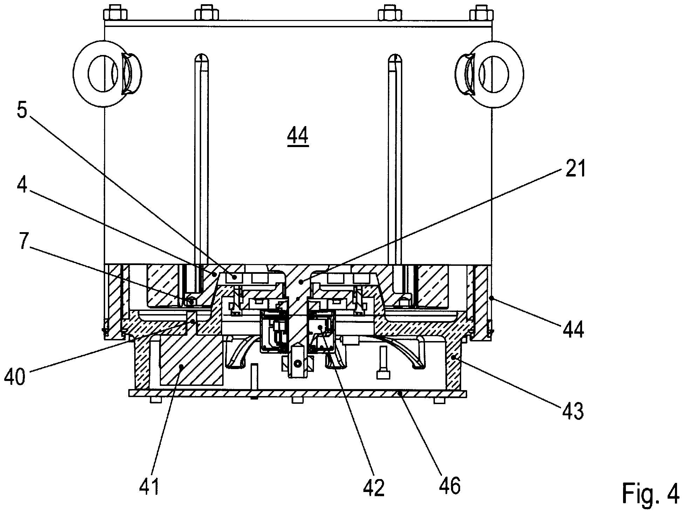

Wie in Figur 4 gezeigt, weist der Elektromotor ein Flanschteil 43 auf, das mit dem Stator beziehungsweise dem restlichen Gehäuseteil des Elektromotors verbunden ist.

Am axialen Endbereich der durch die Zentrierscheibe 4 hindurchragenden Rotorwelle 23 ist ein Winkelsensor 42 angeordnet.

Am Flanschteil 43 ist ein als Hubmagnet 41 fungierender angeordnet, der einen axial geführt und bewegbar angeordneten Stößel 40 aufweist. Bei Bestromung des Elektromagneten wird der Stößel 40 vorzugswiese entgegen der von einem Federelement erzeugten Federkraft angezogen, also axial von der Zentrierscheibe 4 weggezogen. Bei Nichtbestromung wird der Stößel vom Federelement somit in eine der Ausnehmungen 7 der Zentrierscheibe 4 eingeführt. Die Ausnehmungen 7 sind in Umfangsrichtung mit einem Winkelabstand zueinander angeordnet, der dem durchschnittlichen Spiel einer elektromagnetisch betätigbaren Reibscheibenbremse entspricht. Vorteilhaft ist hierbei also ein Winkelabstand zwischen 1° und 5°. Vorzugsweise wird die Drehzahl des Elektromotors vor Bestromen des Elektromagneten, also vor Auslösen der Bremse auf einen sehr niedrigen Wert gebracht. Auf diese Weise rastet der Stößel 40 sicher ein in eine der Ausnehmungen 7.

Mittels des oder der Hubmagneten 41 ist somit eine Haltefunktion ausführbar, also die Drehbewegung des Rotors verhinderbar.

Durch mehrreihige Ausführung, also Ausführung gemäß Figur 2 oder 3, der Zentrierscheibe 4 ist ein noch weiter verfeinertes Einrasten bewirkbar. Allerdings muss für jede der Reihen ein Hubmagnet 41 und ein Stößel 40 vorgesehen werden. Nach Einrasten eines der Stößel 40 rastet der einer anderen Reihe zugeordnete Stößel 40 nicht mehr ein, da die Reihen zueinander einen Winkelversatz aufweisen.

Bei weiteren erfindungsgemäßen Ausführungsbeispielen sind weitere Hubmagnete 41 samt Stößel 40 vorsehbar, wobei die Stößel 40 jeweils in Umfangsrichtung voneinander beabstandet sind.

Für den Transport, also vor Verbindung mit der anzutreibenden Vorrichtung, wird der Rotor des Elektromotors am Stator mittels der Zentrierscheibe 4 zentriert. Hierzu weist das Flanschteil 43 an seiner zur Zentrierscheibe 4 zugewandten Innenseite einen als Konusabschnitt ausgeführten Oberflächenabschnitt auf. Hiermit ist ein entsprechender als Konusabschnitt, insbesondere Außenkonusabschnitt, ausgeführter Oberflächenabschnitt der Zentrierscheibe 4 zentrierbar und/oder anschmiegbar. Mittels vorzugsweise axial gerichteter Verbindungsschrauben wird dann der derart am Flanschteil 43, also am Stator, ausgerichtete Rotor fixiert und erst wieder nach Einführen der Rotorwelle 23 in die Hohlwelle 24. Somit ist dann der Rotor zur anzutreibenden Welle, insbesondere Hohlwelle 24, ausgerichtet und nach Lösen der Verbindungsschrauben relativ zum Stator drehbar. Danach wird dann die Schrumpfverbindung fixiert. Schließlich werden die Statorwicklungen des Stators bestromt und somit Drehmoment erzeugbar.

Beim Verbinden des lagerlosen Elektromotors mit der anzutreibenden Maschine wird der Stator ebenfalls am Gehäuse der anzutreibenden Vorrichtung zentriert und fixiert. Somit ist ein präziser Betrieb des Elektromotors ermöglicht, obwohl der Rotor nicht direkt im Stator gelagert ist sondern der Rotor des Elektromotors über die Lagerung der Hohlwelle 24 der anzutreibenden Vorrichtung drehbar gelagert ist.

Das Flanschteil 43 weist eine Ausnehmung auf, in welcher der oder die Elektromagnete 41 und auch der Winkelsensor 42 aufgenommen sind und gehäusebildend vom Flanschteil 43 und einem darauf aufgesetzten Deckelteil 46 umgeben sind.

Das aus Schrumpfscheibe 1 und den Pressringen 8 und 9 gebildete Pressverbindungsmittel wird mittels der Spannschrauben 5 betätigt. Betätigen bedeutet hierbei, dass mittels des Einschraubens der Spannschrauben 5 die kraftschlüssige Verbindung, insbesondere Pressverbindung, insbesondere Schrumpfverbindung, zwischen anzutreibender Welle, insbesondere Hohlwelle 24, und Rotorwelle 23 bewirkt wird.

Bei weiteren erfindungsgemäßen Ausführungsbeispielen ist statt der Schrumpfscheibe samt Pressringen eine andere kraftschlüssige oder formschlüssige Verbindung mittels eines entsprechenden Pressverbindungsmittels eingesetzt. Wichtig ist dabei, dass bei Betätigung des Mittels einerseits die Verbindung zwischen Hohlwelle 24 und Rotorwelle 23 bewirkt wird und andererseits die Betätigung über die Spannschrauben 5 erfolgt. Außerdem soll zumindest ein Teil des gegebenenfalls mehrteilig ausgeführten Mittels das ihm nächstbenachbarte Rotorsegment 2 berühren.

### Bezugszeichenliste

- 1: Schrumpfscheibe
- 2: Rotorsegment
- 3: Dauermagnete
- 4: Zentrierscheibe
- 5: Spannschraube
- 6: Kragenabschnitt
- 7: Ausnehmung, insbesondere Bohrloch
- 8: Pressring
- 9: Pressring
- 21: Ausnehmung auf erstem Radialabstand
- 22: Ausnehmung auf zweitem Radialabstand
- 23: Rotorwelle
- 24: Hohlwelle
- 30: Bohrung für jeweilige Spannschraube 5
- 40: Stößel
- 41: Hubmagnet, insbesondere Elektromagnet
- 42: Winkelsensor
- 43: Flanschteil
- 44: Statorgehäuse
- 45: Aussparung für Haltefunktion
- 46: Deckelteil

## Patentansprüche

1. Lagerloser Elektromotor mit Rotor und Stator,
wobei der Rotor eine Rotorwelle (23) aufweist, auf die ein Rotorpaket aufgesteckt ist und mit der Rotorwelle (23) drehfest verbunden ist,
wobei das Rotorpaket in axialer Richtung aufeinander gestapelte Rotorsegmente (2) und eine Zentrierscheibe (4) sowie ein Pressverbindungsmittel aufweist,
wobei der aus den Rotorsegmenten (2) gebildete Stapel zwischen der Zentrierscheibe (4) und dem Pressverbindungsmittel angeordnet ist,
der Elektromotor ein mit dem Stator verbundenes Flanschteil (43) aufweist,
wobei die Zentrierscheibe (4) an ihrer Oberfläche einen Konusabschnitt aufweist und das Flanschteil (43) einen entsprechenden Konusabschnitt an seiner Oberfläche aufweist, so dass die beiden Konusabschnitte zumindest in einem Abschnitt oder abschnittsweise aneinander anliegen,
wobei die Zentrierscheibe (4) mit dem Flanschteil (43) lösbar verbunden ist,
wobei die Zentrierscheibe (4) erste Ausnehmungen (22) aufweist, welche in Umfangsrichtung voneinander regelmäßig beabstandet sind und auf einem ersten Radialabstand angeordnet sind,
wobei am Flanschteil (43) zumindest ein als Hubmagnet (41) ausgeführter Elektromagnet angeordnet ist, von welchem jeweils ein Stößel (40) entgegen der von einem Federelement erzeugten Federkraft bewegbar und axial in eine der ersten Ausnehmungen (22) der Zentrierscheibe (4) einführbar ist,
wobei der Winkelabstand einer jeweiligen ersten Ausnehmung (22) zur in Umfangsrichtung jeweils nächstbenachbarten ersten Ausnehmung (22) zwischen 1° und 5° beträgt,
wobei der jeweilige Stößel (40) auf demselben Radialabstand angeordnet ist wie eine der ersten Ausnehmungen (22).

2. Elektromotor nach Anspruch 1,
**dadurch gekennzeichnet, dass**
das Pressverbindungsmittel von Spannschrauben (5) haltbar ist.

3. Elektromotor nach Anspruch 2,
**dadurch gekennzeichnet, dass**
das Pressverbindungsmittel mittels mehrerer der Spannschrauben (5) betätigbar ist zum Herstellen einer Pressverbindung der Rotorwelle (23) mit einer anzutreibenden Welle.

4. Elektromotor nach Anspruch 2 oder 3,
**dadurch gekennzeichnet, dass**
Spannschrauben (5) durch Ausnehmungen der Rotorsegmente (2) und/oder Zentrierscheibe (4) hindurchgeführt sind,
wobei mittels der Spannschrauben (5) der Stapel zwischen der Zentrierscheibe (4) und dem Pressverbindungsmittel einspannbar ist.

5. Elektromotor nach Anspruch 2, 3 oder 4,
**dadurch gekennzeichnet, dass**
die Spannschrauben (5) jeweils in eine Gewindebohrung eines Teils des Pressverbindungsmittels eingeschraubt sind.

6. Elektromotor nach mindestens einem der vorangegangenen Ansprüche,
**dadurch gekennzeichnet, dass**
am radial äußeren Umfang des jeweiligen Rotorsegments (2) Dauermagnete (3) angeordnet sind.

7. Elektromotor nach mindestens einem der vorangegangenen Ansprüche,
**dadurch gekennzeichnet, dass**
das Pressverbindungsmittel eine Schrumpfscheibe und Pressringe (8, 9) aufweist, wobei die Schrumpfscheibe (1) an ihrer äußeren Oberfläche zwei Konusabschnitte aufweist, worauf die Pressringe (8, 9) verschiebbar angeordnet sind, wobei Spannschrauben (5) mit zumindest einem der Pressringe (8, 9) schraubverbindbar sind.

8. Elektromotor nach mindestens einem der vorangegangenen Ansprüche,
**dadurch gekennzeichnet, dass**
zweite Ausnehmungen (21) auf einem zweiten Radialabstand angeordnet sind, wobei der erste Radialabstand größer ist als der zweite Radialabstand.

9. Elektromotor nach mindestens einem der vorangegangenen Ansprüche,
**dadurch gekennzeichnet, dass**
bei Bestromung des Elektromagneten der Stößel (40) von der Zentrierscheibe (4) weggezogen ist und bei Nichtbestromung des Elektromagneten der Stößel (40) von dem Federelement in eine der ersten Ausnehmungen (22) gedrückt wird

10. Elektromotor nach Anspruch 8,
**dadurch gekennzeichnet, dass**
am Flanschteil (43) ein als zweiter Hubmagnet (41) ausgeführter Elektromagnet angeordnet ist, von welchem jeweils ein Stößel (40) entgegen der von einem Federelement erzeugten Federkraft bewegbar und axial in eine der zweiten Ausnehmungen (21) der Zentrierscheibe (4) einführbar ist,
wobei der jeweilige Stößel (40) des zweiten Hubmagnets (41) auf demselben Radialabstand angeordnet ist wie eine der zweiten Ausnehmungen (21),
wobei beide Hubmagnete (41) eine Bremsfunktion ausführen.

11. Elektromotor nach mindestens einem der vorangegangenen Ansprüche,
**dadurch gekennzeichnet, dass**
das Flanschteil (43) mit einem Deckelteil (46) derart verbunden ist, dass die Elektromagnete und ein Winkelsensor (42) vom Flanschteil (43) zusammen mit dem Deckeilteil gehäusebildend umgeben sind.

## Claims

1. Bearing-free electric motor, comprising a rotor and a stator,
wherein the rotor has a rotor shaft (23), onto which a rotor stack is plugged, said rotor stack being connected to the rotor shaft (23) in such a way as to rotate therewith,
wherein the rotor stack has rotor segments (2), which are stacked one on top of the other in an axial direction, and a centring disc (4) and also a press-fit connection means, wherein the stack formed of the rotor segments (2) is arranged between the centring disc (4) and the press-fit connection means,
the electric motor has a flange part (43) which is connected to the stator,
wherein the centring disc (4) has a conical section on its surface and the flange part (43) has a corresponding conical section on its surface, so that the two conical sections bear against one another at least in one section or in some sections,
wherein the centring disc (4) is releasably connected to the flange part (43),
wherein the centring disc (4) has first openings (22) which are spaced apart from one another at regular intervals in the circumferential direction and are arranged at a first radial distance,
wherein at least one electromagnet configured as a lifting magnet (41) is arranged on the flange part (43), by which electromagnet a respective plunger (40) can be moved counter to the spring force generated by a spring element and can be introduced axially into one of the first openings (22) in the centring disc (4),
wherein the angular spacing of a respective first opening (22) from the respective next-adjacent first opening (22) in the circumferential direction is between 1° and 5°,
wherein the respective plunger (40) is arranged at the same radial distance as one of the first openings (22).

2. Electric motor according to claim 1,
**characterized in that**
the press-fit connection means can be retained by clamping screws (5).

3. Electric motor according to claim 2,
**characterized in that**
the press-fit connection means can be operated by means of a plurality of the clamping screws (5) in order to establish a press-fit connection of the rotor shaft (23) to a shaft that is to be driven.

4. Electric motor according to claim 2 or 3,
**characterized in that**
clamping screws (5) are passed through openings in the rotor segments (2) and/or centring disc (4),
wherein the stack can be clamped between the centring disc (4) and the press-fit connection means by means of the clamping screws (5).

5. Electric motor according to claim 2, 3 or 4,
**characterized in that**
the clamping screws (5) are each screwed into a threaded bore in one part of the press-fit connection means.

6. Electric motor according to at least one of the preceding claims,
**characterized in that**
permanent magnets (3) are arranged on the radially outer circumference of the respective rotor segment (2).

7. Electric motor according to at least one of the preceding claims,
**characterized in that**
the press-fit connection means comprises a shrink disc and compression rings (8, 9), wherein the shrink disc (1) has two conical sections on its outer surface, on which the compression rings (8, 9) are displaceably arranged, wherein clamping screws (5) can be screw-connected to at least one of the compression rings (8, 9).

8. Electric motor according to at least one of the preceding claims,
**characterized in that**
second openings (21) are arranged at a second radial distance, the first radial distance being greater than the second radial distance.

9. Electric motor according to at least one of the preceding claims,
**characterized in that**
the plunger (40) is pulled away from the centring disc (4) when the electromagnet is energized, and the plunger (40) is pushed into one of the first openings (22) by the spring element when the electromagnet is not energized.

10. Electric motor according to claim 8,
**characterized in that**
an electromagnet configured as a second lifting magnet (41) is arranged on the flange part (43), by which electromagnet a respective plunger (40) can be moved counter to the spring force generated by a spring element and can be introduced axially into one of the second openings (21) in the centring disc (4),
wherein the respective plunger (40) of the second lifting magnet (41) is arranged at the same radial distance as one of the second openings (21),
wherein both lifting magnets (41) perform a braking function.

11. Electric motor according to at least one of the preceding claims,
**characterized in that**
the flange part (43) is connected to a cover part (46) such that the electromagnets and an angle sensor (42) are enclosed by the flange part (43) together with the cover part (46) in such a way as to form a housing.

## Revendications

1. Moteur électrique sans palier, avec un rotor et un stator,
sachant que le rotor présente un arbre de rotor (23), sur lequel est monté un paquet rotorique qui est relié en solidarité de rotation à l'arbre de rotor (23),
sachant que le paquet rotorique présente des segments de rotor (2) empilés les uns sur les autres en direction axiale, et un disque de centrage (4) ainsi qu'un moyen de liaison par pressage,
sachant que la pile formée par les segments de rotor (2) est disposée entre le disque de centrage (4) et le moyen de liaison par pressage,
que le moteur électrique présente une partie formant bride (43) reliée au stator,
sachant que le disque de centrage (4) présente sur sa surface une portion conique et que la partie formant bride (43) présente sur sa surface une portion conique correspondante, de sorte que les deux portions coniques s'appliquent l'une contre l'autre au moins dans une portion ou sectoriellement,
sachant que le disque de centrage (4) est relié de manière amovible à la partie formant bride (43),
sachant que le disque de centrage (4) présente des premiers évidements (22) qui sont régulièrement espacés les uns des autres en direction périphérique et qui sont disposés à une première distance radiale,
sachant qu'au moins un électroaimant réalisé comme aimant de translation (41) est disposé sur la partie formant bride (43), aimant par lequel un poussoir respectif (40) peut être déplacé à l'encontre de la force de ressort produite par un élément formant ressort, et introduit axialement dans un des premiers évidements (22) du disque de centrage (4), sachant que la distance angulaire entre un premier évidement respectif (22) et le premier évidement respectif (22) immédiatement voisin en direction périphérique est comprise entre 1° et 5°,
sachant que le poussoir respectif (40) est disposé à la même distance radiale qu'un des premiers évidements (22).

2. Moteur électrique selon la revendication 1, **caractérisé en ce que** le moyen de liaison par pressage peut être maintenu par des vis de serrage (5).

3. Moteur électrique selon la revendication 2, **caractérisé en ce que** le moyen de liaison par pressage peut être actionné au moyen de plusieurs des vis de serrage (5) afin de réaliser une liaison par pressage de l'arbre de rotor (23) avec un arbre à entraîner.

4. Moteur électrique selon la revendication 2 ou 3, **caractérisé en ce que** les vis de serrage (5) sont passées à travers des évidements des segments de rotor (2) et/ou du disque de centrage (4).
sachant que les vis de serrage (5) permettent de serrer la pile entre le disque de centrage (4) et le moyen de liaison par pressage.

5. Moteur électrique selon la revendication 2, 3 ou 4, **caractérisé en ce que** les vis de serrage (5) sont respectivement vissées dans un perçage fileté d'un élément du moyen de liaison par pressage.

6. Moteur électrique selon au moins une des revendications précédentes, **caractérisé en ce que** des aimants permanents (3) sont disposés sur la périphérie radialement extérieure du segment de rotor respectif (2).

7. Moteur électrique selon au moins une des revendications précédentes, **caractérisé en ce que** le moyen de liaison par pressage présente un disque de frettage et des bagues de pressage (8, 9), sachant que le disque de frettage (1) présente sur sa surface extérieure deux portions coniques sur lesquelles les bagues de pressage (8, 9) sont disposées avec possibilité de coulissement, sachant que les vis de serrage (5) peuvent être reliées par vissage à au moins une des bagues de pressage (8, 9).

8. Moteur électrique selon au moins une des revendications précédentes, **caractérisé en ce que** des deuxièmes évidements (21) sont disposés à une deuxième distance radiale, sachant que la première distance radiale est plus grande que la deuxième distance radiale.

9. Moteur électrique selon au moins une des revendications précédentes, **caractérisé en ce que** le poussoir (40) est tiré en éloignement du disque de centrage (4) lorsque l'électroaimant est alimenté en courant, et le poussoir (40) est poussé par l'élément formant ressort dans un des premiers évidements (22) lorsque l'électroaimant n'est pas alimenté en courant.

10. Moteur électrique selon la revendication 8, **caractérisé en ce qu'**un électroaimant réalisé comme deuxième aimant de translation (41) est disposé sur la partie formant bride (43), aimant par lequel un poussoir respectif (40) peut être déplacé à l'encontre de la force de ressort produite par un élément formant ressort, et introduit axialement dans un des deuxièmes évidements (21) du disque de centrage (4),
sachant que le poussoir respectif (40) du deuxième aimant de translation (41) est disposé à la même distance radiale qu'un des deuxièmes évidements (21),
sachant que les deux aimants de translation (41) exercent une fonction de freinage.

11. Moteur électrique selon au moins une des revendications précédentes, **caractérisé en ce que** la partie formant bride (43) est reliée à une partie formant couvercle (46) de telle sorte que les électroaimants et un capteur d'angle (42) sont entourés par la partie formant bride (43) conjointement avec la partie formant couvercle, formant ainsi un boîtier.
